(19) Europäisches Patentamt / European Patent Office / Office européen des brevets

(11) **EP 4 037 830 B1**

(12) **FASCICULE DE BREVET EUROPEEN**

(45) Date de publication et mention de la délivrance du brevet:
**26.02.2025 Bulletin 2025/09**

(21) Numéro de dépôt: **20771584.8**

(22) Date de dépôt: **18.09.2020**

(51) Classification Internationale des Brevets (IPC):
**B01J 29/76** (2006.01)    **C01B 39/48** (2006.01)
**B01D 53/94** (2006.01)

(52) Classification Coopérative des Brevets (CPC):
**B01J 29/76; B01D 53/9418; B01J 35/30;**
**B01J 35/56; B01J 35/70; B01J 37/0246;**
**C01B 39/48;** B01D 2255/20761; B01D 2255/50;
B01D 2255/9155; B01J 2229/186; B01J 2235/00;
B01J 2235/15; Y02A 50/20; Y02T 10/12

(86) Numéro de dépôt international:
**PCT/EP2020/076093**

(87) Numéro de publication internationale:
**WO 2021/063704 (08.04.2021 Gazette 2021/14)**

(54) **SYNTHESE A BASSE TEMPERATURE DE CATALYSEUR A BASE DE ZEOLITHE AFX ET SON APPLICATION EN NH3-SCR**

TIEFTEMPERATURSYNTHESE VON KATALYSATOREN AUF DER BASIS VON ZEOLITH-AFX UND DEREN VERWENDUNG IN NH3-SCR

LOW-TEMPERATURE SYNTHESIS OF CATALYST BASED ON ZEOLITE AFX AND APPLICATION THEREOF IN NH3-SCR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.09.2019 FR 1910842**

(43) Date de publication de la demande:
**10.08.2022 Bulletin 2022/32**

(73) Titulaire: **IFP Energies nouvelles**
**92852 Rueil-Malmaison Cedex (FR)**

(72) Inventeurs:
• **HARBUZARU, Bogdan**
**92852 RUEIL-MALMAISON CEDEX (FR)**
• **BERTHOUT, David**
**92852 RUEIL-MALMAISON CEDEX (FR)**
• **LLIDO, Eric**
**92852 RUEIL-MALMAISON CEDEX (FR)**
• **JOTHIE, Laëtitia**
**92852 RUEIL-MALMAISON CEDEX (FR)**

(74) Mandataire: **IFP Energies nouvelles**
**Département Propriété Industrielle**
**Rond Point de l'échangeur de Solaize**
**BP3**
**69360 Solaize (FR)**

(56) Documents cités:
EP-A1- 3 378 831          WO-A1-2017/087385
WO-A1-2017/202495      WO-A1-2019/224081
WO-A1-2019/224082      WO-A1-2019/224083
WO-A1-2019/224086      WO-A1-2019/224087
US-A1- 2016 096 169

• MARTÍN NURIA ET AL: "Cage-based small-pore catalysts for NH3-SCR prepared by combining bulky organic structure directing agents with modified zeolites as reagents", APPLIED CATALYSIS B: ENVIRONMENTAL, ELSEVIER, AMSTERDAM, NL, vol. 217, 29 May 2017 (2017-05-29), pages 125 - 136, XP085112832, ISSN: 0926-3373, DOI: 10.1016/J.APCATB.2017.05.082

**(Cont. page suivante)**

- DUSTIN W FICKEL ET AL: "The ammonia selective catalytic reduction activity of copper-exchanged small-pore zeolites", APPLIED CATALYSIS B: ENVIRONMENTAL, ELSEVIER, AMSTERDAM, NL, vol. 102, no. 3, 9 December 2010 (2010-12-09), pages 441 - 448, XP028139896, ISSN: 0926-3373, [retrieved on 20101216], DOI: 10.1016/J.APCATB.2010.12.022
- WANG AIYONG ET AL: "NH3-SCR on Cu, Fe and Cu+Fe exchanged beta and SSZ-13 catalysts: Hydrothermal aging and propylene poisoning effects", CATALYSIS TODAY, vol. 320, 7 October 2017 (2017-10-07), pages 91 - 99, XP085513181, ISSN: 0920-5861, DOI: 10.1016/J.CATTOD.2017.09.061
- XIAOJIAO LIU ET AL: "Ammonia selective catalytic reduction of NO over Ce-Fe/Cu-SSZ-13 catalysts", RSC ADVANCES, vol. 5, no. 104, 24 September 2015 (2015-09-24), pages 85453 - 85459, XP055552933, DOI: 10.1039/C5RA16072C

**Description**

## DOMAINE TECHNIQUE

L'invention a pour objet un procédé de préparation d'un catalyseur à base d'une zéolithe de type structural AFX synthétisée à basse température et d'au moins un métal de transition.

## TECHNIQUE ANTERIEURE

Les émissions d'oxydes d'azote (NOx) qui résultent de la combustion de combustibles fossiles sont une préoccupation majeure pour la société. Des normes de plus en plus sévères sont mises en place par les instances gouvernementales afin de limiter l'impact des émissions issues de la combustion sur l'environnement et sur la santé. Pour les véhicules légers en Europe dans le cadre de la réglementation Euro 6c, les émissions de NOx et de particules doivent atteindre un niveau très bas pour l'ensemble des conditions de fonctionnement. Le nouveau cycle de conduite WLTC (Worldwide harmonized Light vehicles Test Cycle) et la réglementation des émissions en conduite réelle (RDE) associée aux facteurs de conformité, exige le développement d'un système de dépollution hautement efficace pour atteindre ces objectifs. La réduction catalytique sélective, désignée par l'acronyme anglo-saxon « SCR » pour « Sélective Catalytic Réduction », apparait comme une technologie efficace pour éliminer les oxydes d'azote dans les gaz d'échappement riches en oxygène, typiques des moteur Diesel et à allumage commandé en mélange pauvre. La réduction catalytique sélective est réalisé grâce à un réducteur, généralement l'ammoniac, et peut ainsi être désignée par $NH_3$-SCR. L'ammoniac ($NH_3$) impliqué dans le processus SCR est généralement généré via la décomposition d'une la solution aqueuse d'urée (AdBlue ou DEF), et produit $N_2$ et $H_2O$ lors de la réaction avec NOx.

Les zéolithes échangées avec des métaux de transitions sont notamment utilisées comme catalyseurs pour les applications $NH_3$-SCR, dans les transports. Les zéolithes à petit pores, en particulier les chabazites échangées au cuivre, sont particulièrement adaptées. Elles existent commercialement sous la forme silico-aluminophosphate Cu-SAPO-34 et aluminosilicates Cu-SSZ-13 (ou Cu-SSZ-62). Leur tenue hydrothermale et leur efficacité de conversion des NOx en font les références actuelles. Cependant, les normes étant de plus en plus contraignantes, les performances des catalyseurs doivent encore être améliorées.

L'utilisation des zéolithes de type structural AFX pour les applications $NH_3$-SCR est connue, mais peu de travaux évaluent l'efficacité de catalyseurs mettant en oeuvre cette zéolithe.

Fickel et al. (Fickel, D. W., & Lobo, R. F., The Journal of Physical Chemistry C, 2010, 114(3), 1633-1640) étudie l'utilisation d'une SSZ-16 (type structural AFX) échangée au cuivre pour l'élimination des NOx. Cette zéolithe est synthétisée conformément au brevet US 5,194,235 (synthèse à 150°C pendant 6 jours), dans lequel le cuivre est introduit par échange en utilisant du sulfate de cuivre(II) à 80°C pendant 1 heure. Des résultats récents (Fickel, D. W., D'Addio, E., Lauterbach, J. A., & Lobo, R. F., Applied Catalysis B: Environmental, 2011, 102(3), 441-448) montrent une excellente conversion et une bonne tenue hydrothermale pour un chargement à 3,78% poids en cuivre.

Les zéolithes de type structural AFX comprennent en particulier la zéolithe SSZ-16, et les zéotypes SAPO-56 et MEAPSO-56. La zéolithe de type structural AFX présente un système tridimensionnel de pores délimités par huit tétraèdres et est formé par deux types de cages: gmelinite (cage GME) et une grande cage AFT (-8,3 x 13,0 Å). De nombreuses méthodes de synthèse de zéolithes de type structural AFX, en particulier de la zéolithe SSZ-16, sont connues. La zéolithe SSZ-16 a été synthétisée en utilisant des espèces organiques azotées dérivées de type 1,4-di(1-azoniabicyclo[2.2.2]octane)butyl dibromide et avec une durée de cristallisation typiquement supérieure à 3 jours et à une température égale ou supérieure à 140°C (US. Patent No. 4,508,837). Chevron Research and Technology Company a préparé la zéolithe SSZ-16 en présence de cations DABCO-$C_n$-diquat, où DABCO représente le 1,4-diazabicyclo[2.2.2] octane et n est 3, 4 ou 5 avec une durée de cristallisation typiquement supérieure à 3 jours et à une température supérieure à 100°C, de préférence supérieure à 130°C (US 5,194,235). S.B. Hong et al ont utilisés l'ion alkylammonium diquaternaire Et6-diquat-n, où Et6-diquat représente N',N'-bis-triethylpentanediammonium et n est 5, comme agent structurant pour la synthèse de la zéolithe SSZ-16 avec une durée de formation de la zéolithe SSZ-16 comprise entre 7 et 14 jours et à une température de 160°C, (Micropor. Mesopor. Mat., 60 (2003) 237-249). On peut citer également l'utilisation des cations 1,3-bis(adamantyl)imidazolium comme agent structurant pour la préparation de zéolithe de type structural AFX avec une durée de cristallisation comprise entre 7 et 10 jours et généralement comprise entre 2 et 15 jours, et à une température supérieure à 100°C, de préférence entre 120 et 160°C (R.H. Archer et al., Microp. Mesopor. Mat., 130 (2010) 255-265, Johnson Matthey Company WO2016077667A1). Inagaki Satoshi et al. (JP2016169139A) ont utilisé des cations divalents N,N,N',N'-tétraarquirubicyclo[2.2.2]oct-7-ene-2,3:05,6-dipyrrolidium substitués avec des groupes alkyle avec une durée de cristallisation généralement comprise entre 20 et 400 heures et à des températures comprises entre 100 et 200°C, de préférence entre 150 et 175°C, pour préparer la zéolithe SSZ-16. Chevron U.S.A. (WO2017/200607 A1) propose de réaliser la synthèse d'une zéolithe SSZ-16 avec une durée de cristallisation de 1 à 28 jours et à des températures comprises entre 130 et 175°C en utilisant les dications : 1,1'-(1,4-cyclohexylenedimethylene)bis[1-methylpiperidinium], 1,1'-(1,4-cyclohexylenedimethylene)bis[1-methylpyrrolidinium], 1,1'-(1,4-cyclohexylenedimethylene)bis[1-ethylpyrrolidinium]. H.-Y. Chen et al. (Johnson Matthey Company, US2018/0093897) ont utilisé un mélange de cations contenant au moins le 1,3-bis(adamantyl)imidazolium et une amine neutre pour préparer la zéolithe JMZ-10 de type structural AFX en absence de cations alcalins avec une durée de cristallisation entre 1 et 20 jours et à des températures comprises entre 100 et 200°C. H.-Y. Chen et al. (Johnson Matthey Company, US2018/0093259) ont utilisé un mélange de cations contenant une molécule organique choisie parmi le 1,3-bis(adamantyl)imidazolium, le N,N-dimethyl-3,5-dimethylpiperidinium, le N,N-diethyl-cis-2,6-dimethylpiperidinium, le N,N,N-1-trimethyladamantylammonium, le N,N-dimethylethyl-cyclohexylammonium et au moins un cation de métal alcalino-terreux pour obtenir la zéolithe JMZ-7 de type structural AFX qui présente des sites Al proches par rapport à une zéolithe obtenue par une synthèse mettant en oeuvre des cations alcalins. La durée nécessaire pour obtenir cette zéolithe varie de 3 à 15 jours à une température supérieure à 100°C, de préférence entre 120 et 180°C.

K.G Strohmaier et al. (Exxon Mobil, WO2017202495A1) ont utilisé la molécule organique 1,1'-(hexane-1,6-dyil) bis(1-méthylpipéridinium) en présence d'un complexe métallique stabilisé par des ligands d'amine pour obtenir une zéolithe de type structural AFX avec une durée de cristallisation de 1 jour à environ 100 jours et à des températures comprises entre 100 et 200°C, de préférence entre 150 et 170°C.

La demanderesse a découvert qu'un catalyseur à base d'une zéolithe de type structural AFX préparé selon un mode de synthèse particulier, c'est-à-dire à des températures de cristallisation inferieures ou égales à 95°C et d'au moins un métal de transition, en particulier du cuivre, présentait des performances intéressantes de conversion des $NO_x$ et de sélectivité vers $N_2O$. Les performances de conversion des NOx, en particulier à basse température (T<250°C), sont notamment supérieures à celles obtenues avec des catalyseurs de l'art antérieur, tels que les catalyseurs à base de zéolithe de type structural AFX échangée au cuivre, tout en conservant une bonne sélectivité vers le protoxyde d'azote $N_2O$. Un autre avantage de cette méthode de synthèse de la zéolithe est qu'il n'est pas nécessaire d'utiliser des réacteurs qui travaillent à une pression supérieure à l'atmosphérique.

## RESUME DE L'INVENTION

L'invention concerne un procédé de préparation d'un catalyseur à base de zéolithe AFX échangée avec au moins un métal de transition comprenant au moins les étapes suivantes :

i) le mélange en milieu aqueux, d'au moins une source de silicium (Si) sous forme oxyde $SiO_2$, au moins une source d'aluminium (Al) sous forme oxyde $Al_2O_3$, d'un composé organique azoté R, R étant le dihydroxyde de 1,6-bis(méthylpiperidinium)hexane, d'au moins une source d'au moins un métal alcalin choisi parmi le lithium, le potassium, ou le sodium, et le mélange d'au moins deux de ces métaux, le mélange réactionnel présentant la composition molaire suivante :

$SiO_2/Al_2O_3$ compris entre 4 et 60, de préférence entre 8 et 40
$H_2O/SiO_2$ compris entre 5 et 60, de préférence entre 10 et 40
$R/SiO_2$ compris entre 0,05 à 0,50, de préférence entre 0,10 et 0,30
$M_2O/SiO_2$ compris entre 0,10 à 0,30, de préférence entre 0,15 et 0,25,
jusqu'à l'obtention d'un gel précurseur homogène;

ii) le traitement hydrothermal sous pression atmosphérique dudit gel précurseur obtenu à l'issue de l'étape i) à une température comprise entre 75°C et 95°C, bornes incluses, pendant une durée comprise entre 40 et 100 heures, bornes incluses, pour obtenir une phase solide cristallisée, dite « solide » ; ladite phase solide formée d'une zéolithe de type structural AFX étant filtrée, lavée puis séchée à la fin de la réaction,

iii) au moins un échange ionique comprenant la mise en contact dudit solide obtenu à l'issue de l'étape précédente, avec une solution comprenant au moins une espèce apte à libérer un métal de transition, een solution sous forme réactive sous agitation à température ambiante pendant une durée comprise entre 1 heure et 2 jours ; dans lequel ledit au moins un de transition libéré dans la solution d'échange de l'étape iii) est sélectionné dans le groupe formé des éléments suivants : Ti, V, Mn, Mo, Fe, Co, Cu, Cr, Zn, Nb, Ce, Zr, Rh, Pd, Pt, Au, W, Ag, de préférence dans le groupe formé des éléments suivants : Fe, Cu, Nb, Ce ou Mn, de manière plus préférée parmi Fe ou Cu et de manière encore plus préférée ledit métal de transition est Cu

iv) traitement thermique par séchage du solide obtenu à l'issue de l'étape précédente à une température comprise entre 20 et 150°C suivi d'au moins une calcination sous flux d'air à une température comprise entre 400 et 700°C.

Les étapes iii) et iv) peuvent être interverties, et éventuellement répétées.
Le gel précurseur obtenu à l'issue de l'étape i) présente avantageusement un ratio molaire de la quantité de SiO2 sur la quantité d'Al2O3 compris entre 4,00 et 60,00, de préférence entre 8,00 et 40,00, bornes incluses.

On peut ajouter des germes cristallins d'une zéolithe de type structural AFX au mélange réactionnel de l'étape i), de préférence en quantité comprise entre 0,05 et 10% de la masse totale des sources d'alumine et de silice sous forme anhydre utilisées dans le mélange réactionnel, lesdits germes cristallins n'étant pas pris en compte dans la masse totale des sources d'alumine et de silice.

L'étape i) peut comprendre une étape de mûrissement du mélange réactionnel à une température comprise entre 20 et 60°C, avec ou sans agitation, pendant une durée Le traitement hydrothermal de l'étape ii) peut être réalisé de préférence à une température comprise entre 85 et 95°C, bornes incluses, pendant une durée de préférence comprise entre 40 et 80 heures, de manière très préférée entre 48 et 80 heures, bornes incluses.

L'étape iii) d'échange ionique est réalisée par mise en contact du solide avec une solution comprenant une seule espèce apte à libérer un métal de transition ou par mises en contact successives du solide avec différentes solutions comprenant chacune au moins une, de préférence une seule, espèce apte à libérer un métal de transition, de préférence les métaux de transition des différentes solutions étant différents entre eux.

Ledit au moins un métal de transition libéré dans la solution d'échange de l'étape iii) est sélectionné dans le groupe formé des éléments suivants : Ti, V, Mn, Mo, Fe, Co, Cu, Cr, Zn, Nb, Ce, Zr, Rh, Pd, Pt, Au, W, Ag, de préférence dans le groupe formé des éléments suivants : Fe, Cu, Nb, Ce ou Mn, de manière plus préférée parmi Fe ou Cu et de manière encore plus préférée ledit métal de transition est Cu.

La teneur en métal(aux) de transition introduite par l'étape d'échange ionique iii) est avantageusement comprise entre 0,5 à 6% massique, de préférence entre 0,5 et 5% massique, de manière plus préférée entre 1 et 4% massique, par rapport à la masse totale du catalyseur final anhydre.

L'étape iv) de traitement thermique peut comprendre un séchage du solide à une température comprise entre 20 et 150°C, de préférence entre 60 et 100°C, pendant une durée compris entre 2 et 24 heures, suivi d'au moins une calcination, sous air, éventuellement sec, à une température comprise entre 450 et 700°C, de préférence entre 500 et 600°C pendant une durée comprise entre 2 et 20 heures, de préférence entre 5 et 10 heures, de manière encore plus préférée entre 6 et 9 heures, le débit d'air éventuellement sec étant de manière préférée compris entre 0,5 et 1,5 L/h/g de solide à traiter, de manière encore plus préférée compris entre 0,7 et 1,2 L/h/g de solide à traiter.

La description concerne également un catalyseur à base d'une zéolithe AFX et d'au moins un métal de transition obtenu par le procédé selon l'une quelconque des variantes décrites.

Le métal ou les métaux de transition peut ou peuvent être sélectionné(s) dans le groupe formé des éléments suivants : Ti, V, Mn, Mo, Fe, Co, Cu, Cr, Zn, Nb, Ce, Zr, Rh, Pd, Pt, Au, W, Ag, de préférence dans le groupe formé des éléments suivants : Fe, Cu, Nb, Ce ou Mn, de manière plus préférée parmi Fe ou Cu et de manière encore plus préférée ledit métal de transition est Cu.

La teneur totale des métaux de transition est avantageusement comprise entre 0,5 à 6% massique, de préférence entre 0,5 et 5% massique, de manière plus préférée entre 1 et 4% massique, par rapport à la masse totale du catalyseur final anhydre. Dans un mode de réalisation, le catalyseur comprend du cuivre, seul, à une teneur comprise entre 0,5 et 6% poids, de préférence entre 0,5 et 5% poids, de manière très préférée entre 1 et 4% poids par rapport à la masse totale du catalyseur final anhydre.

Le catalyseur peut comprendre du cuivre en association avec au moins un autre métal de transition choisi dans le groupe formé par Fe, Nb, Ce, Mn, la teneur en cuivre du catalyseur étant comprise entre 0,05 et 2% massique, de préférence 0,5 et 2% massique, la teneur dudit au moins un autre métal de transition étant comprise entre 1 et 4% massique par rapport à la masse totale du catalyseur final anhydre.

Le catalyseur peut comprendre du fer en association avec un autre métal choisi dans le groupe formé par Cu, Nb, Ce, Mn, la teneur en fer étant comprise entre 0,05 et 2% massique, de préférence entre 0,5 et 2% massique, la teneur dudit autre métal de transition étant comprise entre 1 et 4% massique, par rapport à la masse totale du catalyseur final anhydre.

La description concerne également l'utilisation du catalyseur tel que décrit précédemment dans l'une quelconque de ses variantes ou obtenu par le procédé selon l'une quelconque de ses variantes, pour la réduction sélective de $NO_x$ par un réducteur tel que $NH_3$ ou $H_2$.

Le catalyseur peut être mis en forme par dépôt sous forme de revêtement sur une structure nid d'abeilles ou une structure à plaques.

La structure nid d'abeilles peut être formée de canaux parallèles ouverts aux deux extrémités ou peut comporter des parois poreuses filtrantes pour lesquelles les canaux parallèles adjacents sont alternativement bouchés de part et d'autre des canaux.

La quantité de catalyseur déposé sur ladite structure peut être comprise entre 50 à 180 g/L pour les structures filtrantes et entre 80 et 200 g/L pour les structures avec canaux ouverts.

Le catalyseur peut être associé à un liant tel que la cérine, l'oxyde de zirconium, l'alumine, la silice-alumine non zéolithique, l'oxyde de titane, un oxyde mixte de type cerine-zircone, un oxyde de tungstène et/ou une spinelle pour être mis en forme par dépôt sous forme de revêtement.

Ledit revêtement peut être associé à un autre revêtement présentant des capacités d'adsorption de polluants en particulier de NOx, de réduction de polluants en particulier des NOx ou favorisant l'oxydation de polluants.

Ledit catalyseur peut également être sous forme d'extrudé, contenant jusqu'à 100% dudit catalyseur.

Avantageusement, la structure revêtue par ledit catalyseur ou obtenue par extrusion dudit catalyseur est intégrée dans une ligne d'échappement d'un moteur à combustion interne.

**LISTE DES FIGURES**

**[Fig 1]**

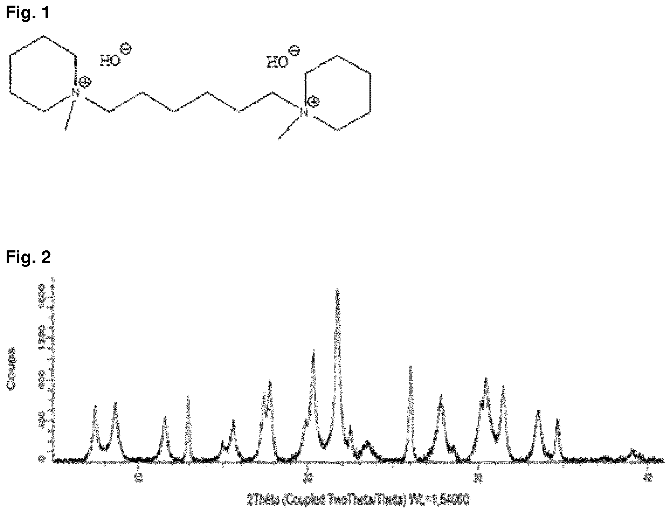

La Figure 1 représente la formule chimique du composé organique azoté qui peut être choisi comme structurant utilisé dans le procédé de synthèse selon l'invention.
**[Fig 2]**
La figure 2 représente le diagramme de diffraction X de la zéolithe AFX obtenue selon l'exemple 2.

D'autres caractéristiques et avantages du procédé de préparation du catalyseur, apparaîtront à la lecture de la description ci-après d'exemples non limitatifs de réalisations, en se référant aux figures annexées et décrites ci-après.

**DESCRIPTION DES MODES DE REALISATION**

L'invention concerne un procédé de préparation d'un catalyseur à base de zéolithe de type structural AFX et d'au moins un métal de transition comprenant au moins les étapes suivantes :

i) le mélange en milieu aqueux, d'au moins une source de silicium (Si) sous forme oxyde $SiO_2$, au moins une source d'aluminium (Al) sous forme oxyde $Al_2O_3$, d'un composé organique azoté R, R étant le dihydroxyde de 1,6-bis(méthylpiperidinium)hexane **(Figure 1),** d'au moins une source d'au moins un métal alcalin choisi parmi le lithium, le potassium, ou le sodium, et le mélange d'au moins deux de ces métaux, le mélange réactionnel présentant la composition molaire suivante :

$SiO_2/Al_2O_3$ compris entre 4 et 60, de préférence entre 8 et 40
$H_2O/SiO_2$ compris entre 5 et 60, de préférence entre 10 et 40
$R/SiO_2$ compris entre 0,05 à 0,50, de préférence entre 0,10 et 0,30
$M_2O/SiO_2$ compris entre 0,10 à 0,30, de préférence entre 0,15 et 0,25,
jusqu'à l'obtention d'un gel précurseur homogène;

ii) le traitement hydrothermal sous pression atmosphérique dudit gel précurseur obtenu à l'issue de l'étape i) à

une température comprise entre 75 et 95°C, de préférence entre 85°C et 95°C, bornes incluses, pendant une durée comprise entre 40 et 100 heures. Avantageusement, le rapport $SiO_2/Al_2O_3$ de la zéolithe AFX obtenue est compris entre 4 et 60, de préférence entre 8 et 40, bornes incluses.

De préférence, M est le sodium.

De préférence, la source d'au moins un métal alcalin est l'hydroxyde de sodium.

On peut ajouter des germes cristallins d'une zéolithe de type structural AFX au mélange réactionnel de l'étape i), de préférence en quantité comprise entre 0,05 et 10% de la masse totale de $SiO_2$ et $Al_2O_3$, lesdits germes cristallins n'étant pas pris en compte dans la masse totale des sources des éléments Si et Al.

L'étape i) peut comprendre une étape de mûrissement du mélange réactionnel à une température comprise entre 20 et 100°C, avec ou sans agitation, pendant une durée comprise entre 30 minutes et 48 heures.

Le traitement hydrothermal de l'étape ii) est avantageusement réalisé sous reflux à une température comprise entre 75 et 95°C, de préférence entre 85°C et 95°C, bornes incluses, pendant une durée comprise entre 40 et 100 heures, de préférence entre 48 et 80 heures, ladite phase solide formée d'une zéolithe de type structural AFX étant filtrée, lavée puis séchée à la fin de la réaction.

iii) au moins un échange ionique comprenant la mise en contact dudit solide obtenu à l'issue de l'étape précédente, avec une solution comprenant au moins une espèce apte à libérer un métal de transition, en solution sous forme réactive sous agitation à température ambiante pendant une durée comprise entre 1 heure et 2 jours, dans lequel ledit au moins un métal de transition libéré dans la solution d'échange de l'étape iii) est sélectionné dans le groupe formé des éléments suivants : Ti, V, Mn, Mo, Fe, Co, Cu, Cr, Zn, Nb, Ce, Zr, Rh, Pd, Pt, Au, W, Ag, de préférence dans le groupe formé des éléments suivants : Fe, Cu, Nb, Ce ou Mn, de manière plus préférée parmi Fe ou Cu et de manière encore plus préférée ledit métal de transition est Cu.

iv) traitement thermique par séchage du solide obtenu à l'issue de l'étape précédente à une température comprise entre 20 et 150°C suivi d'au moins une calcination sous flux d'air à une température comprise entre 400 et 700°C.

Les étapes iii) et iv) peuvent être interverties, et éventuellement répétées.

Plus particulièrement, le procédé selon la présente invention comprend une étape i)de mélange en milieu aqueux, d'au moins une source de silicium (Si) sous forme oxyde $SiO_2$, au moins une source d'aluminium (Al) sous forme oxyde $Al_2O_3$, d'un composé organique azoté R, R étant le dihydroxyde de 1,6-bis(méthylpiperidinium)hexane, d'au moins une source d'au moins un métal alcalin choisi parmi le lithium, le potassium, ou le sodium, et le mélange d'au moins deux de ces métaux, le mélange réactionnel présentant la composition molaire suivante :

$SiO_2/Al_2O_3$ compris entre 4 et 60, de préférence entre 8 et 40
$H_2O/SiO_2$ compris entre 5 et 60, de préférence entre 10 et 40
$R/SiO_2$ compris entre 0,05 à 0,50, de préférence entre 0,10 et 0,30
$M_2O/SiO_2$ compris entre 0,10 à 0,30, de préférence entre 0,15 et 0,25,
jusqu'à l'obtention d'un gel précurseur homogène;
puis une étape ii) de traitement hydrothermal dudit gel précurseur obtenu à l'issue de l'étape i) à une température comprise entre 75°C et 95°C, de préférence entre 85°C et 95°C, bornes incluses, pendant une durée comprise entre 40 et 100 heures, de préférence entre 48 et 80 heures, jusqu'à ce que ladite zéolithe de type structural AFX de haute pureté se forme.

Dans la composition molaire du mélange réactionnel ci-dessus et dans l'ensemble de la description :

$SiO_2$ désigne la quantité molaire de silicium exprimée sous forme oxyde, et $Al_2O_3$ désigne la quantité molaire d'aluminium exprimée sous forme oxyde,
$H_2O$ la quantité molaire d'eau présente dans le mélange réactionnel,
R la quantité molaire dudit composé organique azoté,
$M_2O$ la quantité molaire exprimée sous forme oxyde de $M_2O$ par la source de métal alcalin.

Un avantage de la présente invention est donc de fournir un nouveau procédé de préparation permettant la formation d'une zéolithe de type structural AFX pure à l'issue de l'étape ii).

Un autre avantage de la présente invention est de permettre la préparation d'un gel précurseur d'une zéolithe de type structural AFX grâce à la combinaison d'une espèce organique ou structurant spécifique comportant deux fonctions ammonium quaternaire, le dihydroxyde de 1,6-bis(méthylpiperidinium)hexane et de conditions opératoires bien spécifiques, notamment un traitement hydrothermal à température contrôlée.

L'étape ii) comprend un traitement hydrothermal dudit gel précurseur obtenu à l'issue de l'étape i) qui est effectué à une température comprise entre 75°C et 95°C, de préférence entre 85°C et 95°C, bornes incluses, pendant une durée comprise entre 40 et 100 heures, de préférence entre 48 et 80 heures, jusqu'à ce que ladite zéolithe de type structural AFX cristallise. Il est ainsi possible d'effectuer cette étape à pression atmosphérique, notamment dans un réacteur ouvert à l'atmosphère. Conformément à l'invention, au moins une source d'au moins un oxyde $SiO_2$ est incorporée dans le mélange pour la mise en oeuvre de l'étape (i) du procédé de préparation. La source de silicium peut être l'une quelconque desdites sources couramment utilisée pour la synthèse de zéolithes, par exemple de la silice en poudre, de l'acide silicique, de la silice colloïdale, de la silice dissoute ou du tétraéthoxysilane (TEOS). Parmi les silices en poudre, on peut utiliser les silices précipitées, notamment celles obtenues par précipitation à partir d'une solution de silicate de métal alcalin, des silices pyrogénées, par exemple du "AEROSIL" et des gels de silice. On peut utiliser des silices colloïdales présentant différentes tailles de particules, par exemple de diamètre équivalent moyen compris entre 10 et 15 nm ou entre 40 et 50 nm, telles que celles commercialisées sous les marques déposées telle que "LUDOX". De manière préférée, la source de silicium est le LUDOX HS-40. Conformément à l'invention, au moins une source de $Al_2O_3$ est incorporée dans le mélange pour la mise en oeuvre de ladite étape (i). La source d'aluminium est de préférence de l'hydroxyde d'aluminium ou un sel d'aluminium, par exemple du chlorure, du nitrate, ou du sulfate, un aluminate de sodium, un alkoxyde d'aluminium, ou de l'alumine proprement dite, de préférence sous forme hydratée ou hydratable, comme par exemple de l'alumine colloïdale, de la pseudoboehmite, de l'alumine gamma ou du trihydrate alpha ou bêta. On peut également utiliser des mélanges des sources citées ci-dessus.

Conformément à l'invention, R est un composé organique azoté, le dihydroxyde de 1,6-bis(méthylpiperidinium) hexane, ledit composé étant incorporé dans le mélange réactionnel pour la mise en oeuvre de l'étape (i), comme structurant organique. L'anion associé aux cations ammoniums quaternaires présents dans l'espèce organique structurante pour la synthèse d'une zéolithe de type structural AFX selon l'invention est l'anion hydroxyde.

Conformément à l'invention, au moins une source d'au moins un métal alcalin est mise en oeuvre dans le mélange réactionnel de l'étape i), M étant de préférence choisi parmi le lithium, le potassium, le sodium et le mélange d'au moins deux de ces métaux. De manière très préférée, M est le sodium.

De préférence, la source d'au moins un métal alcalin et/ou alcalino-terreux M est l'hydroxyde de sodium.

Il peut être avantageux d'additionner des germes d'une zéolithe de type structural AFX au mélange réactionnel au cours de ladite étape i) du procédé de l'invention afin de réduire le temps nécessaire à la formation des cristaux d'une zéolithe de type structural AFX et/ou la durée totale de cristallisation. Lesdits germes cristallins favorisent également la formation de ladite zéolithe de type structural AFX au détriment d'impuretés. De tels germes comprennent des solides cristallisés, notamment des cristaux d'une zéolithe de type structural AFX. Les germes cristallins sont généralement ajoutés dans une proportion comprise entre 0,05 et 10% de la masse totale des sources desdits élément(s) Si et Al sous forme anhydre utilisées dans le mélange réactionnel, lesdits germes cristallins n'étant pas pris en compte dans la masse totale des sources des éléments Si et Al. Lesdits germes ne sont pas non plus pris en compte pour déterminer la composition du mélange réactionnel et/ou du gel, définie plus avant, c'est-à-dire dans la détermination des différents rapports molaires de la composition du mélange réactionnel.

L'étape i) de mélange est mise en oeuvre jusqu'à obtention d'un mélange homogène, de préférence pendant une durée supérieure ou égale à 10 minutes, de préférence sous agitation par tout système connu de l'homme du métier à faible ou fort taux de cisaillement.

A l'issue de l'étape i) on obtient un gel précurseur homogène.

Il peut être avantageux de mettre en oeuvre un mûrissement du mélange réactionnel avant la cristallisation hydrothermale au cours de ladite étape i) du procédé de l'invention afin de contrôler la taille des cristaux d'une zéolithe de type structural AFX. Ledit mûrissement favorise également la formation de ladite zéolithe de type structural AFX au détriment d'impuretés. Le mûrissement du mélange réactionnel au cours de ladite étape i) du procédé de l'invention peut être réalisé à température ambiante ou à une température comprise entre 20 et 60°C avec ou sans agitation, pendant une durée avantageusement comprise entre 30 min et 48 heures.

Conformément à l'étape ii) du procédé selon l'invention, le gel précurseur obtenu à l'issue de l'étape i) est soumis à un traitement hydrothermal, réalisé à une température comprise entre 75 et 95°C, préférentiellement réalisé à une température comprise entre 85 et 95°C, bornes incluses pendant une durée comprise entre 40 et 100 heures, jusqu'à ce que ladite zéolithe de type structural AFX se forme.

La durée nécessaire pour obtenir la cristallisation varie entre 40 et 100 heures, de préférence entre 48 et 80 heures.

La mise en réaction s'effectue généralement sous agitation ou en absence d'agitation, de préférence sous agitation. Comme système d'agitation on peut utiliser tout système connu par l'homme de métier, par exemple, des pales inclinées avec des contrepales, des turbines d'agitation, des vis d'Archimède.

A la fin de la réaction, après mise en oeuvre de ladite étape ii) du procédé de préparation selon l'invention, la phase solide formée d'une zéolithe de type structural AFX est filtrée, lavée puis séchée. Le séchage est généralement réalisé à une température comprise entre 20 et 150°C, de préférence entre 60 et 100°C, pendant une durée comprise entre 5 et 24 heures.

Il est également avantageux d'obtenir la forme protonée de la zéolithe de type structural AFX obtenue par le procédé selon l'invention. Ladite forme protonée peut être obtenue en effectuant un échange d'ions avec un acide, en particulier un acide minéral fort comme l'acide chlorhydrique, sulfurique ou nitrique, ou avec un composé tel que le chlorure, le sulfate ou le nitrate d'ammonium. L'échange d'ions peut être effectué par mise en suspension de ladite zéolithe de type structural AFX en une ou plusieurs fois avec la solution d'échange d'ions. Ladite zéolithe peut être calcinée avant ou après l'échange d'ions, ou entre deux étapes d'échange d'ions. La zéolithe est, de préférence, calcinée avant l'échange d'ions, afin d'éliminer toute substance organique incluse dans la porosité de la zéolithe, dans la mesure où l'échange d'ions s'en trouve facilité.

Le procédé de préparation du catalyseur selon l'invention comprend également : iii) au moins un échange ionique comprenant la mise en contact dudit solide obtenu à l'issue de l'étape précédente, avec une solution comprenant au moins une espèce apte à libérer un métal de transition, en solution sous forme réactive sous agitation à température ambiante pendant une durée comprise entre 1 heure et 2 jours ;

Le métal ou les métaux de transition compris dans le catalyseur est (sont) sélectionné(s) dans le groupe formé des éléments suivants : Ti, V, Mn, Mo, Fe, Co, Cu, Cr, Zn, Nb, Ce, Zr, Rh, Pd, Pt, Au, W, Ag.

De préférence, le catalyseur comprend du cuivre, seul ou associé avec au moins un autre métal de transition, choisi dans le groupe des éléments listés précédemment ; en particulier Fe, Nb, Ce, Mn.

La teneur totale des métaux de transition est avantageusement comprise entre 0,5 à 6% massique, de préférence entre 0,5 et 5% massique, et de façon encore plus préférée entre 1 et 4% massique, par rapport à la masse totale du catalyseur final, sous sa forme anhydre.

Pour le procédé selon l'invention, dans lequel le métal de transition est le cuivre, seul, la teneur en cuivre introduite par l'étape ionique iii) est comprise entre 0,5 et 6%, de préférence entre 0,5 et 5%, et de manière plus préférée entre 1 et 4% poids par rapport à la masse totale du catalyseur final anhydre.

Pour le procédé selon l'invention, dans lequel le métal de transition est le cuivre en association avec au moins un autre métal de transition choisi dans le groupe formé par Fe, Nb, Ce, Mn, la teneur en cuivre introduite par l'étape d'échange ionique iii) est comprise entre 0,05 et 2% massique, de préférence 0,5 et 2% massique alors que celle de l'autre métal de transition se situe préférablement entre 1 et 4% massique, les teneurs en métaux de transition étant données en pourcentage massiques par rapport à la masse totale du catalyseur sec final.

Pour les catalyseurs qui ne contiennent que du fer comme métal de transition, la teneur se situe entre 0,5 et 4% et encore préférablement entre 1,5 et 3,5% par rapport à la masse totale du catalyseur final anhydre.

Pour les catalyseurs comprenant du fer et un autre élément comme, de préférence Cu, Nb, Ce, Mn la teneur en fer du catalyseur se situe entre 0,05 et 2% massique, de préférence entre 0,5 et 2% massique alors que celle de l'autre métal de transition se situe préférablement entre 1 et 4% massique, les teneurs en métaux de transition étant données en pourcentage massiques par rapport à la masse totale du catalyseur sec final.

Selon l'invention, par « espèce apte à libérer un métal de transition », on entend une espèce apte à se dissocier en milieu aqueux, comme par exemple les sulfates, les nitrates, les chlorures, les oxalates, les complexes organométalliques d'un métal de transition ou leurs mélanges. De préférence, l'espèce apte à libérer un métal de transition est un sulfate ou un nitrate dudit métal de transition.

Selon l'invention, la solution avec laquelle le solide cristallisé ou le solide cristallisé séché et calciné est mis en contact, comprend au moins une espèce apte à libérer un métal de transition, de préférence une seule espèce apte à libérer un métal de transition, de préférence le fer ou le cuivre, préférentiellement le cuivre.

Le catalyseur peut également comprendre d'autres éléments, comme par exemple des métaux alcalins et/ou alcalino-terreux, par exemple le sodium, provenant notamment de la synthèse, en particulier des composés du milieu réactionnel de l'étape i) du procédé de préparation dudit catalyseur.

Le procédé de préparation comprend également une étape iv) de traitement thermique par séchage du solide obtenu à l'issue de l'étape précédente à une température comprise entre 20 et 150°C suivi d'au moins une calcination sous flux d'air à une température comprise entre 450 et 700°C, les étapes iii) et iv) pouvant avantageusement être interverties, et éventuellement répétées si besoin.

Ladite étape iv) de traitement thermique comprend un séchage du solide à une température comprise entre 20 et 150°C, de préférence entre 60 et 100°C, avantageusement pendant une durée compris entre 2 et 24 heures, suivi d'au moins une calcination, sous air, éventuellement sec, à une température avantageusement comprise entre 450 et 700°C, de préférence entre 500 et 600°C pendant une durée comprise entre 2 et 20 heures, de préférence entre 5 et 10 heures, de manière plus préférée entre 6 et 9 heures, le débit d'air éventuellement sec étant de manière préférée compris entre 0,5 et 1,5 L/h/g de solide à traiter, de manière plus préférée compris entre 0,7 et 1,2 L/h/g de solide à traiter. La calcination peut être précédée d'une montée en température progressive.

Le catalyseur obtenu à l'issue de l'étape iv) de traitement thermique est dépourvu de toute espèce organique, en particulier dépourvu du structurant organique R.

La présente description concerne également le catalyseur comprenant une zéolithe de type structural AFX et au moins un métal de transition susceptible d'être obtenu ou directement obtenu par le procédé précédemment décrit.

La description concerne enfin l'utilisation d'un catalyseur pour la réduction sélective catalytique des NOx en présence d'un réducteur.

A l'issue de ladite étape de préparation ii) de la zéolithe AFX, la diffraction des rayons X permet de vérifier que le solide obtenu par le procédé selon l'invention est bien une zéolithe de type structural AFX. La pureté obtenue est avantageusement supérieure à 90%, de préférence supérieure à 95%, de manière très préférée supérieure à 99,8% en poids.

Ce diagramme de diffraction est obtenu par analyse radiocristallographique au moyen d'un diffractomètre en utilisant la méthode classique des poudres avec le rayonnement $K\alpha_1$ du cuivre ($\lambda$ = 1,5406Å). A partir de la position des pics de diffraction représentée par l'angle 2θ, on calcule, par la relation de Bragg, les équidistances réticulaires $d_{hkl}$ caractéristiques de l'échantillon. L'erreur de mesure $\Delta(d_{hkl})$ sur $d_{hkl}$ est calculée grâce à la relation de Bragg en fonction de l'erreur absolue $\Delta(2\theta)$ affectée à la mesure de 2θ. Une erreur absolue $\Delta(2\theta)$ égale à ± 0,02° est communément admise. L'intensité relative $I_{rel}$ affectée à chaque valeur de $d_{hkl}$ est mesurée d'après la hauteur du pic de diffraction correspondant. Le diagramme de diffraction des rayons X du solide cristallisé de type structural AFX selon l'invention comporte au moins les raies aux valeurs de $d_{hkl}$ données dans le Tableau 1. Dans la colonne des $d_{hkl}$, on a indiqué les valeurs moyennes des distances inter-réticulaires en Angströms (Å). Chacune de ces valeurs doit être affectée de l'erreur de mesure $\Delta(d_{hkl})$ comprise entre ± 0,6Å et ± 0,01Å.

Tableau 1 : Valeurs moyennes des dhkl et intensités relatives mesurées sur un diagramme de diffraction de rayons X du solide cristallisé de type structural AFX.

**[Table 1]**

| 2 thêta (°) | dhkl (Å) | Irel | 2 thêta (°) | dhkl (Å) | Irel |
|---|---|---|---|---|---|
| 7,47 | 11,83 | mf | 22,52 | 3,95 | f |
| 8,56 | 10,32 | f | 26,06 | 3,42 | m |

(suite)

| 2 thêta (°) | dhkl (Å) | Irel | 2 thêta (°) | dhkl (Å) | Irel |
|---|---|---|---|---|---|
| 8,67 | 10,19 | mf | 27,69 | 3,22 | mf |
| 11,59 | 7,63 | f | 27,76 | 3,21 | f |
| 12,96 | 6,82 | mf | 27,86 | 3,20 | mf |
| 14,99 | 5,91 | ff | 29,74 | 3,00 | ff |
| 15,60 | 5,67 | f | 30,22 | 2,95 | mf |
| 17,42 | 5,09 | mf | 30,49 | 2,93 | mf |
| 17,77 | 4,99 | mf | 31,48 | 2,84 | mf |
| 19,86 | 4,47 | f | 33,57 | 2,67 | f |
| 20,32 | 4,37 | m | 34,68 | 2,58 | f |
| 21,74 | 4,08 | FF | | | |

La spectrométrie de fluorescence des rayons X (FX) est une technique d'analyse chimique utilisant une propriété physique de la matière, la fluorescence de rayons X. Elle permet l'analyse de la majorité des éléments chimiques à partir du Béryllium (Be) dans des gammes de concentration allant de quelques ppm à 100%, avec des résultats précis et reproductibles. On utilise les rayons X pour exciter les atomes qui sont dans l'échantillon, ce qui leur fait émettre des rayons X à énergie caractéristique de chaque élément présent. L'intensité et l'énergie de ces rayons X sont ensuite mesurées pour déterminer la concentration des éléments dans le matériau.

**Utilisation du catalyseur**

La description concerne également l'utilisation du catalyseur, directement préparé ou susceptible d'être préparé par le procédé décrit précédemment pour la réduction sélective de $NO_x$ par un réducteur tel que $NH_3$ ou $H_2$, avantageusement mis en forme par dépôt sous forme de revêtement (« washcoat » selon la terminologie anglo-saxonne) sur une structure nid d'abeilles principalement pour les applications mobiles ou une structure à plaques que l'on retrouve particulièrement pour les applications stationnaires.

La structure nid d'abeilles est formée de canaux parallèles ouverts aux deux extrémités (flow-through en anglais) ou comporte des parois poreuses filtrantes et dans ce cas les canaux parallèles adjacents sont alternativement bouchés de part et d'autre des canaux afin de forcer le flux de gaz à traverser la paroi (wall-flow monolith en anglais). Ladite structure nid d'abeilles ainsi revêtue constitue un pain catalytique. Ladite structure peut être composée de cordiérite, carbure de silicium (SiC), titanate d'aluminium (AlTi), alumine alpha, mullite ou tout autre matériau dont la porosité est comprise entre 30 et 70%. Ladite structure peut être réalisée en tôle métallique, en acier inoxydable contenant du Chrome et de l'Aluminium, acier de type FeCrAl.

La quantité de catalyseur déposé sur ladite structure est comprise entre 50 à 180 g/L pour les structures filtrantes et entre 80 et 200 g/L pour les structures avec canaux ouverts.

Le revêtement proprement dit (« washcoat ») comprend le catalyseur, avantageusement associé à un liant tel que la cérine, l'oxyde de zirconium, l'alumine, la silice-alumine non zéolithique, l'oxyde de titane, un oxyde mixte de type cérine-zircone, un oxyde de tungstène, une spinelle. Ledit revêtement est avantageusement appliqué à ladite structure par une méthode de dépôt (washcoating en anglais) qui consiste à tremper le monolithe dans une suspension (slurry en anglais) de poudre de catalyseur dans un solvant, de préférence de l'eau, et potentiellement des liants, oxydes métalliques, stabilisateurs ou autres promoteurs. Cette étape de trempe peut être répétée jusqu'à atteindre la quantité souhaitée de revêtement. Dans certains cas le slurry peut aussi être pulvérisé au sein du monolithe. Le revêtement une fois déposé, le monolithe est calciné à une température de 300 à 600°C pendant 1 à 10 heures.

Ladite structure peut être revêtue d'un ou plusieurs revêtements. Le revêtement comprenant le catalyseur est avantageusement associé à, c'est-à-dire recouvre un ou est recouvert par, un autre revêtement présentant des capacités d'adsorption de polluants en particulier de NOx, de réduction de polluants en particulier des NOx ou favorisant l'oxydation de polluants, en particulier celle de l'ammoniac.

Une autre possibilité est de mettre le catalyseur sous forme d'extrudé. Dans ce cas, la structure obtenue peut contenir jusqu'à 100% de catalyseur.

Ladite structure revêtue par le catalyseur est avantageusement intégrée dans une ligne d'échappement d'un moteur à combustion interne fonctionnant principalement en mélange pauvre, c'est-à-dire en excès d'air par rapport à la stoechiométrie de la réaction de combustion comme c'est le cas pour les moteurs Diesel par exemple. Dans ces conditions de fonctionnement du moteur, les gaz d'échappement contiennent notamment les polluants suivants : des suies, des hydrocarbures imbrulés (HC), du monoxyde de carbone (CO), des oxydes d'azotes (NOx). En amont de ladite structure revêtue du catalyseur peut être placé un catalyseur d'oxydation dont la fonction est d'oxyder les HC et le CO ainsi qu'un filtre pour éliminer les suies des gaz d'échappement, la fonction de ladite structure revêtue étant d'éliminer le NOx, sa gamme de fonctionnement se situant entre 100 et 900°C et de manière préférée entre 200°C et 500°C.

## AVANTAGES DE L'INVENTION

Le catalyseur, à base d'une zéolithe de type structural AFX et d'au moins un métal de transition, en particulier du cuivre, présente des propriétés et une facilité de préparation améliorées par rapport aux catalyseurs de l'art antérieur. En particulier, l'utilisation du catalyseur permet d'obtenir des températures d'amorçage plus faibles pour la réaction de conversion des NOx et une meilleure conversion des $NO_x$ sur l'ensemble de la gamme de température de fonctionnement (150°C - 600°C), tout en conservant une bonne sélectivité en $N_2O$. Il présente aussi une meilleure tenue en vieillissement hydrothermal, garantissant des performances élevées même après ce vieillissement.

## EXEMPLES

L'invention est illustrée par les exemples suivants qui ne présentent, en aucun cas, un caractère limitatif.

**Exemple 1:** préparation du dihydroxyde de 1,6-bis(méthylpiperidinium)hexane (structurant R).

50 g de 1,6-dibromohexane (0,20 mole, 99%, Alfa Aesar) sont ajoutés dans un ballon de 1 L contenant 50 g de N-méthylpipéridine (0,51 mole, 99%, Alfa Aesar) et 200 mL d'éthanol. Le milieu réactionnel est agité et porté à reflux pendant 5 heures. Le mélange est ensuite refroidi à température ambiante, puis filtré. Le mélange est versé dans 300 mL de diéthyléther froid, puis le précipité formé est filtré et lavé avec 100 mL de diéthyléther. Le solide obtenu est recristallisé dans un mélange éthanol/éther. Le solide obtenu est séché sous vide pendant 12 heures. On obtient 71 g d'un solide blanc (soit un rendement de 80%).
Le produit possède le spectre RMN $^1$H attendu. RMN $^1$H ($D_2O$, ppm/TMS) : 1,27 (4H,m) ; 1,48 (4H,m) ; 1,61 (4H,m) ; 1,70 (8H,m) ; 2,85 (6H,s) ; 3,16 (12H,m).
18,9 g d'$Ag_2O$ (0,08 mole, 99%, Aldrich) sont ajoutés dans un bécher en téflon de 250 ml contenant 30 g du structurant dibromure de 1,6-bis(méthylpiperidinium)hexane (0,07 mol) préparé et 100 mL d'eau déionisée. Le milieu réactionnel est agité à l'abri de la lumière pendant 12 heures. Le mélange est ensuite filtré. Le filtrat obtenu est composé d'une solution aqueuse de dihydroxyde de 1,6-bis(méthylpiperidinium)hexane. Le dosage de cette espèce est réalisé par RMN du proton en utilisant l'acide formique en tant qu'étalon.

**Exemple 2:** préparation d'un catalyseur contenant une zéolithe de type structural AFX selon l'invention.

Préparation de la zéolithe AFX

49,83 g d'une solution aqueuse de dihydroxyde de 1,6-bis(méthylpiperidinium)hexane (18,36% en poids) préparé selon l'exemple 1 ont été mélangés avec 0,466 g d'eau déionisée. 2,1 g d'hydroxyde de sodium (solide, pureté 98% en poids, Aldrich) sont ajoutés au mélange précédent, la préparation obtenue est maintenue sous agitation pendant 10 minutes. Par la suite, 1,66 g d'aluminate de sodium (53,17% $Al_2O_3$ en poids, Strem Chemicals) sont incorporés et le gel de synthèse est maintenu sous agitation pendant 15 minutes. Au final, 25,96 g de silice colloïdale (Ludox HS40, 40% $SiO_2$ en poids, Aldrich) et 1,038 g de germes d'une zéolithe de type structural AFX obtenue par n'importe quelle méthode connue par l'homme du métier ont été incorporés dans le mélange de synthèse. La composition molaire du mélange sans prendre en compte les germes est la suivante: 100 $SiO_2$: 5 $Al_2O_3$: 16,7 R: 22,36 $Na_2O$: 1836 $H_2O$, soit un ratio $SiO_2/Al_2O_3$ de 10. Le gel précurseur est ensuite transféré, après homogénéisation, dans un réacteur équipé d'un réflux. Le réacteur est ensuite chauffé avec une montée de 5°C/min en température jusqu'à 95°C pendant 40 heures sous agitation à 200 tr/min avec un système à 4 pales inclinées. Le produit cristallisé obtenu est filtré, lavé à l'eau déionisée puis séché une nuit à 100°C. La perte au feu du produit obtenu après séchage est de 15%. Le solide est ensuite introduit dans un four à moufle où est réalisée une étape de calcination: le cycle de calcination comprend une montée de 1,5°C/min en température jusqu'à 200°C, un palier à 200°C maintenu durant 2 heures, une montée de 1°C/min en température jusqu'à 550°C suivi d'un palier à 550°C maintenu durant 8 heures puis un retour à la température ambiante.
Le produit solide calciné a été analysé par diffraction des rayons X et identifié comme étant constitué d'une zéolithe de type structural AFX de pureté supérieure à 99,8%. Le diagramme de diffraction effectué sur le solide de type structural AFX calciné est donné sur la **Figure 2**. Le produit présente un rapport molaire $SiO_2/Al_2O_3$ de 12 tel que déterminé par fluorescence X.

La zéolithe AFX calcinée est ensuite mise en contact avec une solution de $NH_4NO_3$ 3 molaire pendant 1 heure sous agitation à 80°C. Le rapport entre le volume de solution de $NH_4NO_3$ et la masse de solide est de 10. Le solide obtenu est filtre et lavé et la procédure d'échange est répété encore deux fois dans les mêmes conditions. Le solide final est séparé, lavé et séché pendant 12 heures à 100°C. La zéolithe AFX sous forme ammoniacale est traitée sous flux d'air à 550°C pendant 8 heures avec une rampe de montée en température de 1°C/min. Le produit obtenu est une zéolithe AFX sous forme protonée.

Echange ionique au Cu

La zéolithe AFX calcinée sous forme protonée est mise en contact avec une solution de $[Cu(NH_3)_4](NO_3)_2$ pendant 1 journée sous agitation à température ambiante. Le solide final est séparé, lavé et séché pendant 12 heures à une température de 100°C.

Le solide échangé Cu-AFX obtenu après la mise en contact avec la solution de $[Cu(NH_3)_4](NO_3)_2$ est calciné sous flux d'air à 550°C durant 8 heures.

Le solide obtenu présente un rapport molaire $SiO_2/Al_2O_3$ de 12 et un pourcentage massique de Cu de 3% tel que déterminé par fluorescence X.

Le catalyseur obtenu est noté CuAFX.

**Exemple 3** : Conversion des NOx en Standard SCR

Un test catalytique de réduction des oxydes d'azote (NOx) par l'ammoniac ($NH_3$) en présence d'oxygène ($O_2$) dans des conditions Standard SCR est réalisé à différentes températures de fonctionnement pour le catalyseur obtenu suivant l'exemple 2 (CuAFX, selon l'invention). Pour le test de chaque échantillon, 200 mg de catalyseur sous forme de poudre sont disposés dans un réacteur en quartz. 145 L/h d'une charge représentative d'un mélange de gaz d'échappement d'un moteur Diesel sont alimentés dans le réacteur.

Cette charge présente la composition molaire suivante : 400 ppm NO, 400 ppm $NH_3$, 8,5% $O_2$, 9% $CO_2$, 10% $H_2O$, qpc $N_2$.

Un analyseur FTIR permet de mesurer la concentration des espèces NO, $NO_2$, $NH_3$, $N_2O$, CO, $CO_2$, $H_2O$, $O_2$ en sortie de réacteur. Les conversions de NOx sont calculées comme suit :

$$\text{Conversion} = (\text{NOx entrée} - \text{NOx sortie}) / \text{NOx entrée}$$

Les températures d'amorçage des catalyseurs sont données ci-dessous pour les conditions Standard-SCR :

**[Table 2]**

|  | T50 | T80 | T90 | T100 |
|---|---|---|---|---|
| CuAFX | 180°C | 212°C | 230°C | 320°C |

T50 correspond à la température à laquelle 50% des NOx du mélange gazeux sont convertis par le catalyseur. T80 correspond à la température à laquelle 80% des NOx du mélange gazeux sont convertis par le catalyseur. T90 correspond à la température à laquelle 90% des NOx du mélange gazeux sont convertis par le catalyseur. T100 correspond à la température à laquelle 100% des NOx du mélange gazeux sont convertis par le catalyseur.

**Exemple 5** : Conversion des NOx en Fast SCR

Un test catalytique de réduction des oxydes d'azote (NOx) par l'ammoniac ($NH_3$) en présence d'oxygène ($O_2$) dans les conditions Fast SCR est réalisé à différentes températures de fonctionnement pour le catalyseur synthétisé suivant l'invention (exemple 2)

200 mg de catalyseur sous forme de poudre est disposé dans un réacteur en quartz. 218 l/h d'une charge représentative d'un mélange de gaz d'échappement d'un moteur Diesel sont alimentés dans le réacteur. Cette charge présente la composition molaire suivante : 200 ppm NO, 200 ppm $NO_2$, 400 ppm $NH_3$, 8,5% $O_2$, 9% $CO_2$, 10% $H_2O$, qpc $N_2$ pour les conditions Fast SCR.

Un analyseur FTIR permet de mesurer la concentration des espèces NO, $NO_2$, $NH_3$, $N_2O$, CO, $CO_2$, $H_2O$, $O_2$ en sortie de réacteur. Les conversions de NOx sont calculées comme suit :

$$Conversion = (NOx \text{ entrée} - NOx \text{ sortie}) / NOx \text{ entrée}$$

Les températures d'amorçage du catalyseurs sont données ci-dessous pour les conditions Fast-SCR

[Table 3]

|  | T50 | T80 | T90 | T100 |
|---|---|---|---|---|
| CuAFX | 144°C | 178°C | 198°C | 255°C |

T50 correspond à la température à laquelle 50% des NOx du mélange gazeux sont convertis par le catalyseur. T80 correspond à la température à laquelle 80% des NOx du mélange gazeux sont convertis par le catalyseur. T90 correspond à la température à laquelle 90% des NOx du mélange gazeux sont convertis par le catalyseur. T100 correspond à la température à laquelle 100% des NOx du mélange gazeux sont convertis par le catalyseur.

Les émissions de protoxyde ($N_2O$) d'azote, dans le cas du catalyseur CuAFX selon l'invention, restent faibles sur toute la plage de températures testée (<15ppm entre 150 et 550°C).

**Revendications**

1. Procédé de préparation d'un catalyseur à base de zéolithe AFX échangée avec au moins un métal de transition comprenant au moins les étapes suivantes :

    i) le mélange en milieu aqueux, d'au moins une source de silicium (Si) sous forme oxyde $SiO_2$, d'au moins une source d'aluminium (Al) sous forme oxyde $Al_2O_3$, d'un composé organique azoté R, R étant le dihydroxyde de 1,6-bis(méthylpiperidinium)hexane, d'au moins une source d'au moins un métal alcalin M choisi parmi le lithium, le potassium, ou le sodium, et le mélange d'au moins deux de ces métaux, le mélange réactionnel présentant la composition molaire suivante :

    $SiO_2/Al_2O_3$     compris entre 4 et 60, de préférence entre 8 et 40
    $H_2O/SiO_2$     compris entre 5 et 60, de préférence entre 10 et 40
    $R/SiO_2$     compris entre 0,05 à 0,50, de préférence entre 0,10 et 0,30
    $M_2O/SiO_2$     compris entre 0,10 à 0,30, de préférence entre 0,15 et 0,25,

    jusqu'à l'obtention d'un gel précurseur homogène;
    ii) le traitement hydrothermal sous pression atmosphérique dudit gel précurseur obtenu à l'issue de l'étape i) à une température comprise entre 75°C et 95°C, bornes incluses, pendant une durée comprise entre 40 et 100 heures, bornes incluses, pour obtenir une phase solide cristallisée, dite « solide » ; ladite phase solide formée d'une zéolithe de type structural AFX étant filtrée, lavée puis séchée à la fin de la réaction,
    iii) au moins un échange ionique comprenant la mise en contact dudit solide obtenu à l'issue de l'étape précédente, avec une solution comprenant au moins une espèce apte à libérer un métal de transition, en solution sous forme réactive sous agitation à température ambiante pendant une durée comprise entre 1 heure et 2 jours ; dans lequel ledit au moins un métal de transition libéré dans la solution d'échange de l'étape iii) est sélectionné dans le groupe formé des éléments suivants : Ti, V, Mn, Mo, Fe, Co, Cu, Cr, Zn, Nb, Ce, Zr, Rh, Pd, Pt, Au, W, Ag, de préférence dans le groupe formé des éléments suivants : Fe, Cu, Nb, Ce ou Mn, de manière plus préférée parmi Fe ou Cu et de manière encore plus préférée ledit métal de transition est Cu.
    iv) traitement thermique par séchage du solide obtenu à l'issue de l'étape précédente à une température comprise entre 20 et 150°C suivi d'au moins une calcination sous flux d'air à une température comprise entre 400 et 700°C.

2. Procédé selon la revendication 1, dans lequel les étapes iii) et iv) sont interverties, et éventuellement répétées.

3. Procédé selon l'une des revendications précédentes dans lequel le gel précurseur obtenu à l'issue de l'étape i) présente un ratio molaire de la quantité totale exprimée en oxydes d'éléments tétravalents sur la quantité totale exprimée en oxydes d'éléments trivalents compris entre 4,00 et 60,00, de préférence entre 8,00 et 40,00, bornes incluses.

4. Procédé selon l'une des revendications précédentes dans lequel on ajoute des germes cristallins d'une zéolithe de type structural AFX au mélange réactionnel de l'étape i), de préférence en quantité comprise entre 0,05 et 10% de la masse totale des sources d'alumine et de silice sous forme anhydre utilisées dans le mélange réactionnel, lesdits germes cristallins n'étant pas pris en compte dans la masse totale des sources d'alumine et de silice.

5. Procédé selon l'une des revendications précédentes dans lequel l'étape i) comprend une étape de mûrissement du mélange réactionnel à une température comprise entre 20 et 60°C, avec ou sans agitation, pendant une durée comprise entre 30 minutes et 48 heures.

6. Procédé selon l'une des revendications 1 à 5 dans lequel le traitement hydrothermal de l'étape ii) est réalisé à une température comprise entre 85 et 95°C, bornes incluses, pendant une durée de préférence comprise entre 40 et 80 heures, de manière très préférée entre 48 et 80 heures, bornes incluses.

7. Procédé selon l'une des revendications 1 à 6, dans lequel l'étape iii) d'échange ionique est réalisée par mise en contact du solide avec une solution comprenant une seule espèce apte à libérer un métal de transition ou par mises en contact successives du solide avec différentes solutions comprenant chacune au moins une, de préférence une seule, espèce apte à libérer un métal de transition, de préférence les métaux de transition des différentes solutions étant différents entre eux.

8. Procédé selon l'une des revendications précédentes dans lequel la teneur en métal(aux) de transition introduite par l'étape d'échange ionique iii) est comprise entre 0,5 à 6% massique, de préférence entre 0,5 et 5% massique, de manière plus préférée entre 1 et 4% massique, par rapport à la masse totale du catalyseur final anhydre.

9. Procédé selon l'une des revendications précédentes, dans lequel l'étape iv) de traitement thermique comprend un séchage du solide à une température comprise entre 20 et 150°C, de préférence entre 60 et 100°C, pendant une durée compris entre 2 et 24 heures, suivi d'au moins une calcination, sous air, éventuellement sec, à une température comprise entre 450 et 700°C, de préférence entre 500 et 600°C pendant une durée comprise entre 2 et 20 heures, de préférence entre 5 et 10 heures, de manière encore plus préférée entre 6 et 9 heures, le débit d'air éventuellement sec étant de manière préférée compris entre 0,5 et 1,5 L/h/g de solide à traiter, de manière encore plus préférée compris entre 0,7 et 1,2 L/h/g de solide à traiter.

10. Procédé selon l'une des revendications précédentes dans lequel le métal est le cuivre, seul, et la teneur en cuivre introduite par l'étape d'échange ionique iii) est comprise entre 0,5 et 6% poids, de préférence entre 0,5 et 5% poids, de manière très préférée entre 1 et 4% poids par rapport à la masse totale du catalyseur final anhydre.

11. Procédé selon l'une des revendications précédentes dans lequel le métal de transition est le cuivre en association avec au moins un autre métal de transition choisi dans le groupe formé par Fe, Nb, Ce, Mn, la teneur en cuivre introduite par l'étape d'échange ionique iii)étant comprise entre 0,05 et 2% massique, de préférence 0,5 et 2% massique, la teneur dudit au moins un autre métal de transition étant comprise entre 1 et 4% massique par rapport à la masse totale du catalyseur final anhydre.

**Patentansprüche**

1. Verfahren zur Herstellung eines Katalysators auf der Basis von AFX-Zeolith, der mit mindestens einem Übergangsmetall ausgetauscht ist, das mindestens die folgenden Schritte umfasst:

i) Mischen indestens einer Quelle von Silicium (Si) in $SiO_2$-Oxidform, mindestens einer Quelle von Aluminium (Al) in $Al_2O_3$-Oxidform, einer organischen Stickstoffverbindung R, wobei es sich bei R um 1,6-Bis(methylpiperidinium)hexandihydroxid handelt, und mindestens einer Quelle von mindestens einem Alkalimetall M, das aus Lithium, Kalium oder Natrium und der Mischung von mindestens zwei dieser Metalle ausgewählt ist, in wässrigem Medium, wobei die Reaktionsmischung die folgende molare Zusammensetzung aufweist:

| | |
|---|---|
| $SiO_2/Al_2O_3$ | zwischen 4 und 60, vorzugsweise zwischen 8 und 40, |
| $H_2O/SiO_2$ | zwischen 5 und 60, vorzugsweise zwischen 10 und 40, |
| $R/SiO_2$ | zwischen 0,05 und 0,50, vorzugsweise zwischen 0,10 und 0,30, |
| $M_2O/SiO_2$ | zwischen 0,10 und 0,30, vorzugsweise zwischen 0,15 und 0,25, |

bis zum Erhalt eines homogenen Vorläufergels;

ii) hydrothermale Behandlung des am Ende von Schritt i) erhaltenen Vorläufergels unter Normaldruck bei einer Temperatur zwischen 75 °C und 95 °C, Grenzen eingeschlossen, über einen Zeitraum zwischen 40 und 100 Stunden, Grenzen eingeschlossen, zum Erhalt einer als "Feststoff" bezeichneten kristallisierten festen Phase; wobei die gebildete feste Phase eines Zeoliths vom AFX-Strukturtyp am Ende der Reaktion filtriert, gewaschen und dann getrocknet wird;

iii) mindestens einen Ionenaustausch, der das Inkontaktbringen des am Ende des vorhergehenden Schritts erhaltenen Feststoffs mit einer Lösung, die mindestens eine Spezies, die ein Übergangsmetall in Lösung in reaktiver Form freisetzen kann, umfasst, unter Rühren bei Umgebungstemperatur über einen Zeitraum zwischen 1 Stunde und 2 Tagen; wobei das in der Austauschlösung von Schritt iii) freigesetzte Übergangsmetall aus der aus den folgenden Elementen gebildeten Gruppe ausgewählt ist: Ti, V, Mn, Mo, Fe, Co, Cu, Cr, Zn, Nb, Ce, Zr, Rh, Pd, Pt, Au, W, Ag, vorzugsweise aus der aus den folgenden Elementen gebildeten Gruppe: Fe, Cu, Nb, Ce oder Mn, vorzugsweise aus Fe oder Cu, und noch weiter bevorzugt das Übergangsmetall Cu ist,

iv) Wärmebehandlung durch Trocknung des am Ende des vorhergehenden Schritts erhaltenen Feststoffs bei einer Temperatur zwischen 20 und 150 °C und gefolgt von mindestens einer Calcinierung unter einem Luftstrom bei einer Temperatur zwischen 400 und 700 °C.

2. Verfahren nach Anspruch 1, wobei die Schritte iii) und iv) vertauscht und gegebenenfalls wiederholt werden.

3. Verfahren nach einem der vorhergehenden Ansprüche, wobei das am Ende von Schritt i) erhaltene Vorläufergel ein Molverhältnis der als Oxide von vierwertigen Elementen ausgedrückten Gesamtmenge zu der als Oxide von dreiwertigen Elementen ausgedrückten Gesamtmenge zwischen 4,00 und 60,00, vorzugsweise zwischen 8,00 und 40,00, Grenzen eingeschlossen, aufweist.

4. Verfahren nach einem der vorhergehenden Ansprüche, wobei man Kristallkeime eines Zeoliths vom AFX-Strukturtyp zu der Reaktionsmischung von Schritt i) gibt, vorzugsweise in einer Menge zwischen 0,05 und 10 % der Gesamtmasse der Quellen von Aluminiumoxid und Siliciumdioxid in wasserfreier Form, die in der Reaktionsmischung verwendet werden, wobei die Kristallkeime in der Gesamtmasse der Quellen von Aluminiumoxid und Siliciumdioxid nicht berücksichtigt werden.

5. Verfahren nach einem der vorhergehenden Ansprüche, wobei der Schritt i) einen Schritt der Reifung der Reaktionsmischung bei einer Temperatur zwischen 20 und 60 °C mit oder ohne Rühren über einen Zeitraum zwischen 30 Minuten und 48 Stunden umfasst.

6. Verfahren nach einem der Ansprüche 1 bis 5, wobei die hydrothermale Behandlung von Schritt ii) bei einer Temperatur zwischen 85 und 95 °C, Grenzen eingeschlossen, über einen Zeitraum vorzugsweise zwischen 40 und 80 Stunden, weiter bevorzugt zwischen 48 und 80 Stunden, Grenzen eingeschlossen, durchgeführt wird.

7. Verfahren nach einem der Ansprüche 1 bis 6, wobei der Ionenaustauschschritt iii) durch Inkontaktbringen des Feststoffs mit einer Lösung, die eine einzige Spezies, die ein Übergangsmetall freisetzen kann, umfasst, durchgeführt wird oder durch aufeinanderfolgendes Inkontaktbringen des Feststoffs mit verschiedenen Lösungen, die jeweils mindestens eine Spezies, vorzugsweise eine einzige Spezies, die ein Übergangsmetall freisetzen kann, umfasst, durchgeführt wird, wobei die Übergangsmetalle der verschiedenen Lösungen vorzugsweise voneinander verschieden sind.

8. Verfahren nach einem der vorhergehenden Ansprüche, wobei der Gehalt an Übergangsmetall bzw. Übergangsmetallen, der durch den Ionenaustauschschritt iii) eingeführt wird, zwischen 0,5 und 6 Massen-%, vorzugsweise zwischen 0,5 und 5 Massen-%, weiter bevorzugt zwischen 1 und 4 Massen-%, bezogen auf die Gesamtmasse des wasserfreien fertigen Katalysators, liegt.

9. Verfahren nach einem der vorhergehenden Ansprüche, wobei der Wärmebehandlungsschritt iv) eine Trocknung des Feststoffs bei einer Temperatur zwischen 20 und 150 °C, vorzugsweise zwischen 60 und 100 °C, über einen Zeitraum zwischen 2 und 24 Stunden und gefolgt von mindestens einer Calcinierung an der Luft, gegebenenfalls trockener Luft, bei einer Temperatur zwischen 450 und 700 °C, vorzugsweise zwischen 500 und 600 °C, über einen Zeitraum zwischen 2 und 20 Stunden, vorzugsweise zwischen 5 und 10 Stunden, noch weiter bevorzugt zwischen 6 und 9 Stunden, umfasst, wobei die Strömungsrate von gegebenenfalls trockener Luft vorzugsweise zwischen 0,5 und 1,5 l/h/g von zu behandelndem Feststoff, noch weiter bevorzugt zwischen 0,7 und 1,2 l/h/g von zu behandelndem Feststoff liegt.

10. Verfahren nach einem der vorhergehenden Ansprüche, wobei es sich bei dem Metall um Kupfer alleine handelt und der Gehalt an Kupfer, der durch den Ionenaustauschschritt iii) eingeführt wird, zwischen 0,5 und 6 Gew.-%, vorzugsweise zwischen 0,5 und 5 Gew.-%, ganz besonders bevorzugt zwischen 1 und 4 Gew.-%, bezogen auf die Gesamtmasse des wasserfreien fertigen Katalysators, liegt.

11. Verfahren nach einem der vorhergehenden Ansprüche, wobei es sich bei dem Übergangsmetall um Kupfer in Kombination mit mindestens einem anderen Übergangsmetall, das aus der aus Fe, Nb, Ce und Mn gebildeten Gruppe ausgewählt ist, handelt, wobei der Gehalt an Kupfer, der durch den Ionenaustauschschritt iii) eingeführt wird, zwischen 0,05 und 2 Massen-%, vorzugsweise 0,5 und 2 Massen-%, liegt und der Gehalt des mindestens einen anderen Übergangsmetalls zwischen 1 und 4 Massen-% liegt, bezogen auf die Gesamtmasse des wasserfreien fertigen Katalysators.

## Claims

1. Process for preparing a catalyst based on an AFX zeolite exchanged with at least one transition metal, comprising at least the following steps:

   i) mixing, in an aqueous medium, at least one source of silicon (Si) in $SiO_2$ oxide form, at least one source of aluminium (Al) in $Al_2O_3$ oxide form, a nitrogenous organic compound R, R being 1,6-bis(methylpiperidinium) hexane dihydroxide, and at least one source of at least one alkali metal M chosen from lithium, potassium or sodium, and the mixture of at least two of these metals, the reaction mixture having the following molar composition:

   | | |
   |---|---|
   | $SiO_2/Al_2O_3$ | between 4 and 60, preferably between 8 and 40 |
   | $H_2O/SiO_2$ | between 5 and 60, preferably between 10 and 40 |
   | $R/SiO_2$ | between 0.05 and 0.50, preferably between 0.10 and 0.30 |
   | $M_2O/SiO_2$ | between 0.10 and 0.30, preferably between 0.15 and 0.25, |

   until a homogeneous precursor gel is obtained;
   ii) hydrothermal treatment, under atmospheric pressure, of said precursor gel obtained at the end of step i) at a temperature of between 75°C and 95°C, limits included, for a period of between 40 and 100 hours, limits included, to obtain a solid crystalline phase, termed "solid"; said solid phase formed by a an AFX-structure zeolite being filtered, washed and then dried at the end of the reaction;
   iii) at least one ion exchange comprising bringing said solid obtained at the end of the previous step into contact with a solution comprising at least one species capable of releasing a transition metal, in solution in reactive form, with stirring at ambient temperature for a period of between 1 hour and 2 days; in which said at least one transition metal released in the exchange solution of step iii) is selected from the group made up of the following elements: Ti, V, Mn, Mo, Fe, Co, Cu, Cr, Zn, Nb, Ce, Zr, Rh, Pd, Pt, Au, W, Ag, preferably from the group made up of the following elements: Fe, Cu, Nb, Ce or Mn, more preferably from Fe or Cu, and even more preferably said transition metal is Cu;
   iv) heat treatment by drying the solid obtained at the end of the previous step at a temperature of between 20 and 150°C, followed by at least one calcination under a stream of air at a temperature of between 400 and 700°C.

2. Process according to Claim 1, in which steps iii) and iv) are reversed, and optionally repeated.

3. Process according to either of the preceding claims, in which the precursor gel obtained at the end of step i) has a molar ratio of the total amount, expressed as oxides, of tetravalent elements to the total amount, expressed as oxides, of trivalent elements of between 4.00 and 60.00, preferably between 8.00 and 40.00, limits included.

4. Process according to one of the preceding claims, in which seed crystals of an AFX-structure zeolite are added to the reaction mixture of step i), preferably in an amount of between 0.05 and 10% of the total mass of the sources of alumina and silica in anhydrous form used in the reaction mixture, said seed crystals not being taken into account in the total mass of the sources of alumina and silica.

5. Process according to one of the preceding claims, in which step i) comprises a step of maturing the reaction mixture at a temperature of between 20 and 60°C, with or without stirring, for a period of between 30 minutes and 48 hours.

6. Process according to one of Claims 1 to 5, in which the hydrothermal treatment of step ii) is carried out at a temperature of between 85 and 95°C, limits included, for a period of preferably between 40 and 80 hours, very preferably between 48 and 80 hours, limits included.

7. Process according to one of Claims 1 to 6, in which the ion-exchange step iii) is carried out by bringing the solid into contact with a solution comprising just one species capable of releasing a transition metal or by bringing the solid into contact successively with various solutions, each comprising at least one, preferably just one, species capable of releasing a transition metal, the transition metals of the various solutions preferably being different from one another.

8. Process according to one of the preceding claims, in which the content of transition metal(s) introduced by the ion-exchange step iii) is between 0.5 and 6% by mass, preferably between 0.5 and 5% by mass, more preferably between 1 and 4% by mass, relative to the total mass of the anhydrous final catalyst.

9. Process according to one of the preceding claims, in which the heat treatment step iv) comprises drying the solid at a temperature of between 20 and 150°C, preferably between 60 and 100°C, for a period of between 2 and 24 hours, followed by at least one calcination in air, optionally dry air, at a temperature of between 450 and 700°C, preferably between 500 and 600°C, for a period of between 2 and 20 hours, preferably between 5 and 10 hours, even more preferably between 6 and 9 hours, the flow rate of optionally dry air being preferably between 0.5 and 1.5 l/h/g of solid to be treated, even more preferably between 0.7 and 1.2 l/h/g of solid to be treated.

10. Process according to one of the preceding claims, in which the metal is copper, alone, and the copper content introduced by the ion-exchange step iii) is between 0.5 and 6% by weight, preferably between 0.5 and 5% by weight, very preferably between 1 and 4% by weight, relative to the total mass of the anhydrous final catalyst.

11. Process according to one of the preceding claims, in which the transition metal is copper in combination with at least one other transition metal chosen from the group made up of Fe, Nb, Ce, Mn, the copper content introduced by the ion-exchange step iii) being between 0.05 and 2% by mass, preferably between 0.5 and 2% by mass, the content of said at least one other transition metal being between 1 and 4% by mass, relative to the total mass of the anhydrous final catalyst.

**Fig. 1**

**Fig. 2**

2Théta (Coupled TwoTheta/Theta) WL=1,54060

**Documents brevets cités dans la description**

- US 5194235 A
- US 4508837 A
- WO 2016077667 A1
- JP 2016169139 A
- WO 2017200607 A1
- US 20180093897 A
- US 20180093259 A
- WO 2017202495 A1

**Littérature non-brevet citée dans la description**

- **FICKEL** ; **FICKEL, D. W.** ; **LOBO, R. F. et al.** *The Journal of Physical Chemistry C*, 2010, vol. 114 (3), 1633-1640
- **FICKEL, D. W.** ; **D'ADDIO, E.** ; **LAUTERBACH, J. A.** ; **LOBO, R. F.** *Applied Catalysis B: Environmental*, 2011, vol. 102 (3), 441-448
- *Micropor. Mesopor. Mat.*, 2003, vol. 60, 237-249
- **R.H. ARCHER et al.** *Microp. Mesopor. Mat.*, 2010, vol. 130, 255-265